# EUROPÄISCHE PATENTSCHRIFT

(11) **EP 3 350 041 B1**
(45) Veröffentlichungstag und Bekanntmachung des Hinweises auf die Patenterteilung: **19.02.2020**
(21) Anmeldenummer: 16739170.5
(22) Anmeldetag: 18.07.2016
(51) Int. Cl.: B60T 13/74, B60T 13/57

(54) **ELEKTROMECHANISCHER BREMSKRAFTVERSTÄRKER UND BREMSSYSTEM**
ELECTROMECHANICAL BRAKE BOOSTER AND BRAKE SYSTEM
SERVOFREIN ÉLECTROMÉCANIQUE ET SYSTÈME DE FREINAGE

(30) Priorität: 14.09.2015 DE 102015217520
(43) Veröffentlichungstag der Anmeldung: 25.07.2018
(73) Patentinhaber: Robert Bosch GmbH, 70442 Stuttgart (DE)
(72) Erfinder: PANUNZIO, Giammaria, 71634 Ludwigsburg (DE); WEISSINGER, Daniel, 70825 Korntal-Muenchingen (DE); BOLLWERK, Andre, 71711 Steinheim an der Murr (DE); NAGEL, Willi, 71686 Remseck / Hochdorf (DE)
(86) Internationale Anmeldenummer: PCT/EP2016/067004
(87) Internationale Veröffentlichungsnummer: WO 2017/045803

(56) Entgegenhaltungen:
- EP-A1- 2 292 483
- WO-A1-2014/012702
- CN-U- 203 005 406
- DE-A1- 2 830 262
- DE-A1- 2 845 794
- DE-A1- 3 203 495
- DE-A1- 19 734 290
- DE-A1-102013 204 692
- DE-A1-102013 208 672
- FR-A1- 2 947 228
- US-A1- 2006 112 819
- US-A1- 2013 192 222

## Beschreibung

Die Erfindung betrifft einen elektromechanischen Bremskraftverstärker für ein Kraftfahrzeug. Die Erfindung betrifft auch ein Bremssystem.

### Stand der Technik

Für die zukünftigen Antriebskonzepte von Kraftfahrzeugen werden alternative Bremsdruckaufbauvorrichtungen benötigt, da wenig, oder kein Vakuum vorliegt, um einen konventionellen Vakuumbremskraftverstärker zu betreiben. Hierzu wurden elektromotorische Bremskraftverstärker entwickelt.

Die DE 10 2012 014 361 A1 offenbart eine Betätigungseinrichtung für einen Hauptbremszylinder eines Kraftfahrzeuges, umfassend ein Gehäuse zur Anordnung zwischen dem Hauptbremszylinder und einem Bremspedal, durch das ein Druckorgan zur Betätigung eines Betätigungskolbens des Hauptbremszylinders verläuft, einen Elektromotor, eine Schnecke, die durch den Elektromotor angetrieben ist und das Druckorgan kreuzt, und ein in dem Gehäuse angeordnetes Getriebe, das die Schnecke mit dem Betätigungskolben derart koppelt, um eine Drehbewegung der Schnecke in eine Translationsbewegung des Betätigungskolbens zu übersetzen.

Außerdem beschreibt die EP 2 292 483 A1 einen elektromechanischen Bremskraftverstärker mit zumindest einem Tragelement, welches an einem Getriebegehäuseboden eines Getriebes des elektromechanischen Bremskraftverstärkers befestigt ist und sich im Wesentlichen parallel zu einer Verstellachse einer Spindel des elektromechanischen Bremskraftverstärkers erstreckt. Ein derartiger elektromechanischer Bremskraftverstärker ist auch in der FR 2 947 228 A1 offenbart.

Des Weiteren beschreibt die DE 32 03 495 A1 eine Vorrichtung zur gemeinsamen Befestigung eines Bremskraftverstärkers und eines Hauptbremszylinders an einem Kraftfahrzeug. Die Vorrichtung umfasst Zuganker, mittels welchen der Bremskraftverstärker und der Hauptbremszylinder gegeneinander verspannt und an einer Fahrzeugspritzwand oder an einem mit der Fahrzeugspritzwand verbundenen Zwischenstück befestigt werden.
Der Erfindung liegt somit die Aufgabe zugrunde, einen verbesserten elektromechanischen Bremskraftverstärker bereitzustellen, welcher geringere Herstellungskosten, ein vermindertes Gewicht und eine reduzierte Baulänge aufweist.

Die Aufgabe wird mit einem elektromechanischen Bremskraftverstärker für ein Kraftfahrzeug mit den Merkmalen des Patentanspruchs 1 gelöst. Des Weiteren wird die Aufgabe mit einem Bremssystem mit den Merkmalen des Patentanspruchs 10 gelöst.

### Offenbarung der Erfindung

Die vorliegende Erfindung schafft einen elektromechanischen Bremskraftverstärker für ein Kraftfahrzeug mit den Merkmalen des Patentanspruchs 1.

Die vorliegende Erfindung schafft des Weiteren ein Bremssystem mit den Merkmalen des Patentanspruchs 10.

Eine Idee der vorliegenden Erfindung ist es, durch das Vorsehen des zumindest einen Tragelementes, an welchem der Hauptbremszylinder befestigbar ist, aus der Kundenschnittstelle resultierende Kräfte sowie Getriebe-Reaktionskräfte durch das zumindest eine Tragelement aufzunehmen. Insbesondere kann (durch das Einpressen des zumindest einen Tragelements in die jeweilige in dem Getriebegehäuseboden ausgebildete Öffnung und das Ausbilden des jeweiligen Bunds des zumindest einen Tragelementes an dem Getriebegehäuseboden) das zumindest eine Tragelement in vorteilhafter Weise bündig mit dem Getriebegehäuseboden in einfacher Weise fest verbunden werden. Somit muss das aus zwei Gehäuseschalen bzw. -hälften bestehende Gehäuse des elektromechanischen Bremskraftverstärkers nicht zur Aufnahme der vorstehend genannten Kräfte ausgelegt werden. Dadurch können Gewicht und Kosten reduziert sowie die Baulänge des elektromechanischen Bremskraftverstärkers verringert werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass ein Gehäuse des elektromechanischen Bremskraftverstärkers eine erste Gehäusehälfte aufweist, in welcher das Getriebe angeordnet ist, und eine zweite Gehäusehälfte aufweist, welche an einem ersten axialen Endabschnitt an der ersten Gehäusehälfte befestigt und an einem zweiten axialen Endabschnitt an dem Hauptbremszylinder befestigbar ist. Aufgrund dessen, dass der Hauptbremszylinder an dem zumindest einen Tragelement befestigbar ist, erstreckt sich das zumindest eine Tragelement von der ersten Gehäusehälfte durch die zweite Gehäusehälfte und ist dort mit dem Hauptbremszylinder verbindbar. Damit wirkt das zumindest eine Tragelement als Tragstruktur des elektromechanischen Bremskraftverstärkers, wodurch das Gehäuse somit keine Tragfunktion mehr aufweist.

Gemäß einer weiteren bevorzugten Weiterbildung ist vorgesehen, dass das zumindest eine Tragelement im Wesentlichen zylindrisch ausgebildet ist, wobei die erste Gehäusehälfte an der zweiten Gehäusehälfte durch zumindest ein an dem zumindest einen Tragelement angeordnetes Befestigungsmittel befestigt ist, und wobei durch das zumindest eine Befestigungsmittel der Hauptbremszylinder an dem zumindest einen Tragelement befestigbar ist. Die erste Gehäusehälfte ist somit in vorteilhafter Weise an der zweiten Gehäusehälfte des Gehäuses durch Vorsehen des zumindest einen Befestigungsmittels in einfacher Art und Weise befestigbar. Des Weiteren ist der Hauptbremszylinder durch das zumindest eine Befestigungsmittel in einfacher Art und Weise an der zweiten Gehäusehälfte des Gehäuses befestigbar.

Gemäß einer weiteren bevorzugten Weiterbildung ist vorgesehen, dass die erste Gehäusehälfte an einem Befestigungspunkt an einer Spritzwand des Kraftfahrzeuges befestigbar ist, wobei sich das zumindest eine Tragelement durch eine in dem Getriebegehäuseboden ausgebildete Öffnung erstreckt, und wobei das zumindest eine Tragelement an dem Befestigungspunkt der Spritzwand des Kraftfahrzeuges befestigbar ist. Somit weist das zumindest eine Tragelement sowohl die Funktion einer Tragstruktur des elektromechanischen Bremskraftverstärkers als auch der Befestigung des elektromechanischen Bremskraftverstärkers an der Spritzwand des Kraftfahrzeuges auf.

Gemäß einer weiteren bevorzugten Weiterbildung ist vorgesehen, dass die erste Gehäusehälfte an einem weiteren Befestigungspunkt der Spritzwand des Kraftfahrzeuges befestigbar ist, wobei ein im Wesentlichen zylindrisch ausgebildetes Befestigungsmittel mit dem Getriebegehäuseboden verbunden ist, welches an dem weiteren Befestigungspunkt der Spritzwand des Kraftfahrzeuges befestigbar ist. Somit weist der elektromechanische Bremskraftverstärker in vorteilhafter Weise ein weiteres Befestigungsmittel zum Befestigen des elektromechanischen Bremskraftverstärkers an der Spritzwand des Kraftfahrzeuges auf, wodurch die Befestigung des elektromechanischen Bremskraftverstärkers an der Spritzwand des Kraftfahrzeuges zum einen verstärkt werden kann und zum anderen eine Winkellage einer Einbauposition des elektromechanischen Bremskraftverstärkers eine verbesserte Variabilität aufweist.

Gemäß einer weiteren bevorzugten Weiterbildung ist vorgesehen, dass an dem ersten axialen Endabschnitt des zumindest einen Tragelementes benachbart zu dem Bund ein Rändel ausgebildet ist, welcher eine größere Länge als eine Dicke des Getriebegehäusebodens aufweist, wobei der Rändel in die in dem Getriebegehäuseboden ausgebildete Öffnung eingepresst ist, wobei der an einer der Einpressseite gegenüberliegenden Seite des Getriebegehäusebodens hervorstehend angeordnete Rändel verstemmt oder verpresst ist. Durch das Einpressen des Rändels in den Getriebegehäuseboden auf einer ersten Seite des Getriebegehäusebodens sowie eines Verstemmens oder Verpressens des auf der gegenüberliegenden Seite des Getriebegehäusebodens hervorstehend angeordnetem Rändel ist das zumindest eine Tragelement in einfacher Art und Weise sowie sicher und zuverlässig an dem Getriebegehäuseboden befestigbar.

Gemäß einer weiteren bevorzugten Weiterbildung ist vorgesehen, dass der Getriebegehäuseboden einen Durchzug mit einem Innengewinde aufweist, wobei der Durchzug einen axialen Endabschnitt des zumindest einen Tragelementes aufnimmt. Somit ist das zumindest eine Tragelement in einfacher Art und Weise mit dem Getriebegehäuseboden verbindbar und weist eine lösbare Verbindung auf.

Gemäß einer weiteren bevorzugten Weiterbildung ist vorgesehen, dass das zumindest eine Tragelement einen Zuganker oder eine Durchgangsschraube aufweist, wobei der Zuganker oder die Durchgangsschraube aus Stahl ausgebildet ist. Somit ist das zumindest eine Tragelement dazu ausgebildet, Kräfte resultierend aus der Kundenschnittstelle sowie Getriebe-Reaktionskräfte aufzunehmen.

Gemäß einer weiteren bevorzugten Weiterbildung ist vorgesehen, dass die erste Gehäusehälfte als Aluminium-Druckguss-Gehäuse und die zweite Gehäusehälfte als Kunststoff-Gehäuse ausgebildet ist oder die erste Gehäusehälfte und die zweite Gehäusehälfte als Stahlblechgehäuse ausgebildet sind. Die Wahl des Materials für die erste Gehäusehälfte und die zweite Gehäusehälfte ist somit an individuelle Anforderungen an das Gehäuse anpassbar.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Längsschnittansicht eines elektromechanischen Bremskraftverstärkers für ein Kraftfahrzeug gemäß einer bevorzugten Ausführungsform der Erfindung;
- Fig. 2: eine Längsschnittansicht des elektromechanischen Bremskraftverstärkers für das Kraftfahrzeug gemäß einer weiteren bevorzugten Ausführungsform der Erfindung;
- Fig. 3: eine vergrößerte Detailansicht eines Tragelementes des in Fig. 2 dargestellten elektromechanischen Bremskraftverstärkers für das Kraftfahrzeug gemäß der weiteren bevorzugten Ausführungsform der Erfindung;
- Fig. 4: eine Schnittdarstellung einer Rückseite eines Getriebegehäusebodens des elektromechanischen Bremskraftverstärkers für das Kraftfahrzeug gemäß der bevorzugten Ausführungsform der Erfindung;
- Fig. 5: eine perspektivische Darstellung einer Vorderseite des Getriebegehäusebodens des elektromechanischen Bremskraftverstärkers für das Kraftfahrzeug gemäß der bevorzugten Ausführungsform der Erfindung;
- Fig. 6: eine perspektivische Darstellung der Rückseite des Getriebegehäusebodens des elektromechanischen Bremskraftverstärkers für das Kraftfahrzeug gemäß einer weiteren bevorzugten Ausführungsform der Erfindung;
- Fig. 7: eine perspektivische Darstellung der Vorderseite des Getriebegehäusebodens des elektromechanischen Bremskraftverstärkers für das Kraftfahrzeug gemäß der weiteren bevorzugten Ausführungsform der Erfindung;
- Fig. 8: eine perspektivische Darstellung des Tragelementes des elektromechanischen Bremskraftverstärkers für das Kraftfahrzeug gemäß einer bevorzugten Ausführungsform der Erfindung;
- Fig. 9: eine perspektivische Darstellung des Getriebegehäusebodens mit montierten Tragelementen des elektromechanischen Bremskraftverstärkers für das Kraftfahrzeug gemäß einer weiteren bevorzugten Ausführungsform der Erfindung;

In den Figuren der Zeichnungen bezeichnen gleiche Bezugszeichen gleiche oder funktionsgleiche Elemente, Bauteile oder Komponenten, soweit nichts Gegenteiliges angegeben ist.

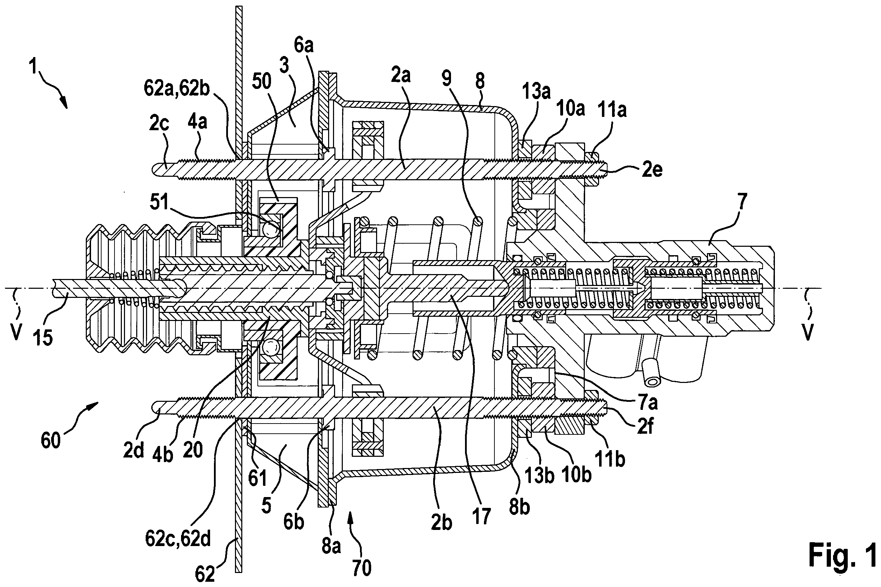

Fig. 1 zeigt eine Längsschnittansicht eines elektromechanischen Bremskraftverstärkers für ein Kraftfahrzeug gemäß einer bevorzugten Ausführungsform der Erfindung.

Der elektromechanische Bremskraftverstärker 1 weist einen (in Fig. 1 nicht gezeigten) Elektromotor auf, welcher über ein Getriebe 60 mit einer Ausgangsstange 17 verbunden ist. Eine Rotation eines Läufers des Elektromotors ist in eine Translationsbewegung der Ausgangsstange 17 umwandelbar. An einem Getriebegehäuseboden 61 des Getriebes 60 ist ein erstes Tragelement 2a und ein zweites Tragelement 2b befestigt. Das erste Tragelement 2a und das zweite Tragelement 2b erstrecken sich im Wesentlichen parallel zu einer Verstellachse V der Ausgangsstange 17. An dem ersten Tragelement 2a und dem zweiten Tragelement 2b ist vorzugsweise ein Hauptbremszylinder 7 befestigbar. Das erste Tragelement 2a und das zweite Tragelement 2b sind dazu ausgebildet, in Axial- und/oder Radialrichtung auf das erste Tragelement 2a und das zweite Tragelement 2b wirkende Kräfte abzustützen.

Ein Gehäuse 70 des elektromechanischen Bremskraftverstärkers 1 weist vorzugsweise eine erste Gehäusehälfte 5 und eine zweite Gehäusehälfte 8 auf. In der ersten Gehäusehälfte 5 ist vorzugsweise das Getriebe 60 angeordnet. Die zweite Gehäusehälfte 8 ist vorzugsweise an einem ersten axialen Endabschnitt 8a an der ersten Gehäusehälfte 5 befestigt und an einem zweiten axialen Endabschnitt 8b an dem Hauptbremszylinder 7 befestigbar.

Das erste Tragelement 2a und das zweite Tragelement 2b sind im Wesentlichen zylindrisch ausgebildet. Alternativ können das erste Tragelement 2a und das zweite Tragelement 2b auch eine andere geeignete Form aufweisen.

Die erste Gehäusehälfte 5 ist vorzugsweise an einem ersten Befestigungspunkt 62a und an einem zweiten Befestigungspunkt 62b an der Spritzwand 62 des Kraftfahrzeuges befestigbar. Das erste Tragelement 2a und das zweite Tragelement 2b erstrecken sich vorzugsweise durch eine (in Fig. 1 nicht dargestellte) in dem Getriebegehäuseboden 61 ausgebildete Öffnung. Des Weiteren ist das erste Tragelement 2a vorzugsweise an dem ersten Befestigungspunkt 62a der Spritzwand 62 des Kraftfahrzeuges befestigbar. Darüber hinaus ist das zweite Tragelement 2b vorzugsweise an dem zweiten Befestigungspunkt 62b der Spritzwand 62 des Kraftfahrzeuges befestigbar.

Das erste Tragelement 2a und das zweite Tragelement 2b sind vorzugsweise als Zuganker aus Stahl ausgebildet. Alternativ können das erste Tragelement 2a und das zweite Tragelement 2b beispielsweise aus einem anderen geeigneten Material sowie einer anderen geeigneten Konstruktion ausgebildet sein.

Die erste Gehäusehälfte 5 ist vorzugsweise als Aluminium-Druckguss-Gehäuse ausgebildet. Die zweite Gehäusehälfte 8 ist vorzugsweise als Kunststoff-Gehäuse ausgebildet. Alternativ können die erste Gehäusehälfte 5 und/oder die zweite Gehäusehälfte 8 auch aus einem anderen geeigneten Material sowie in einer anderen geeigneten Fertigungsart hergestellt sein.

Das erste Tragelement 2a und das zweite Tragelement 2b sind vorzugsweise in Gehäusebohrungen der ersten Gehäusehälfte 5 mit einer Presslänge 3 eingepresst, welche sich vorzugsweise über eine gesamte Breite der ersten Gehäusehälfte 5 erstreckt. Ein Gewinde 4a des ersten Tragelementes 2a und ein Gewinde 4b des zweiten Tragelementes 2b werden herstellerseitig an einem (in Fig. 1 nicht gezeigten) Bremspedallagerbock verschraubt und klemmen die erste Gehäusehälfte 5 bzw. das Getriebegehäuse zwischen einem Bund 6a des ersten Tragelementes 2a und der Spritzwand 62 des Kraftfahrzeuges.

Darüber hinaus klemmt die erste Gehäusehälfte 5 vorzugsweise zwischen einem Bund 6b des zweiten Tragelementes 2b und der Spritzwand 62 des Kraftfahrzeuges. Das vorzugsweise verschraubte erste Tragelement 2a und das vorzugsweise verschraubte zweite Tragelement 2b sind autark stabil und können Kräfte in alle Richtungen aufnehmen, insbesondere Zugkräfte des Hauptbremszylinders 7.

Das an dem ersten Tragelement 2a angeordnete erste Befestigungsmittel 10a ist vorzugsweise durch eine Schraubmutter ausgebildet und ist an einem zweiten axialen Endabschnitt 2e des ersten Tragelements 2a angeordnet. Durch diese Schraubmutter weist ein Flansch 7a des Hauptbremszylinders 7 einen Anschlag an dem ersten Befestigungsmittel 10a auf. Zwischen dem ersten Befestigungsmittel 10a und der zweiten Gehäusehälfte 8 ist vorzugsweise eine Schaumdichtung 13a verpresst. Ein weiteres Befestigungsmittel 11a ist vorzugsweise auf einer dem Gehäuse abgewandten Seite des Hauptbremszylinders 7 an dem ersten Tragelement 2a angeordnet und klemmt den Flansch 7a des Hauptbremszylinders 7 gegen den Anschlag.

Das an dem zweiten Tragelement 2b angeordnete zweite Befestigungsmittel 10b ist vorzugsweise durch eine Schraubmutter ausgebildet und ist an einem zweiten axialen Endabschnitt 2f des zweiten Tragelements 2b angeordnet. Durch diese Schraubmutter weist der Flansch 7a des Hauptbremszylinders 7 einen Anschlag an dem zweiten Befestigungsmittel 10b auf. Zwischen dem zweiten Befestigungsmittel 10b und der zweiten Gehäusehälfte 8 ist vorzugsweise eine Schaumdichtung 13b verpresst. Ein weiteres Befestigungsmittel 11b ist vorzugsweise auf der dem Gehäuse abgewandten Seite des Hauptbremszylinders 7 an dem zweiten Tragelement 2b angeordnet und klemmt den Flansch 7a des Hauptbremszylinders 7 gegen den Anschlag.

Die zweite Gehäusehälfte 8 ist mit der ersten Gehäusehälfte 5 vorzugsweise verschraubt. Eine Rückstellfeder 9 zum Rückstellen der Ausgangsstange 17 stützt sich vorzugsweise an der zweiten Gehäusehälfte 8 ab. Die zweite Gehäusehälfte 8 weist vorzugsweise überwiegend eine Dicht- und Schutzfunktion auf und ist daher aus Kunststoff ausgebildet.

Eine Bremskraft eines Fahrers des Kraftfahrzeuges an einer Eingangsstange 15 wird vorzugsweise elektromotorisch über das Getriebe 60 verstärkt. Servounterstützung und Fahrerkraft betätigen vereint über die Ausgangsstange 17 den Hauptbremszylinder 7.

Bei der Druckguss-Ausführung des Gehäuses des elektromechanischen Bremskraftverstärkers 1 führen ABS-Pulsationen zu hohen mechanischen Belastungen. Die Axialkräfte werden über eine Spindelmutter 20 an einem inneren tellerförmigen Bereich eines Kunststoff-Zahnrads 50 abgestützt. An einem äußeren tellerförmigen Bereich des Kunststoff-Zahnrads 50 geht die Axialkraft über in den Kugellager-Außenring. Bei ABS-Pulsationen federt der tellerförmige Kunststoffbereich durch und dämpft die ABS-Pulsation. Den maximalen Federweg gibt ein Spalt 51 zwischen Zahnrad und Kugellager-Innenring vor. Eine Belastung des Zahnrads 50, insbesondere bei hohen Temperaturen, wird vorzugsweise vermieden, indem der Spalt 51 überwunden wird und das Zahnrad am Kugellager-Innenring auf Block geht.

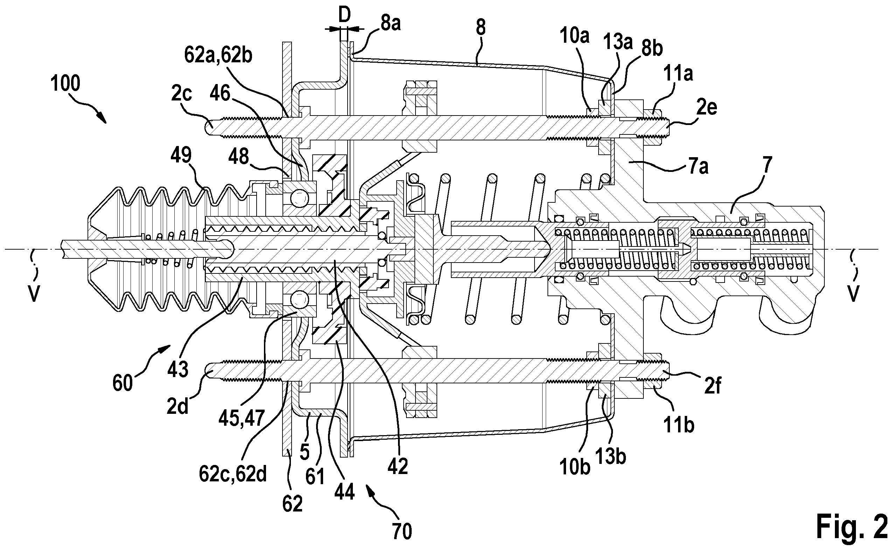

Fig. 2 zeigt eine Längsschnittansicht des elektromechanischen Bremskraftverstärkers 100 für das Kraftfahrzeug gemäß einer weiteren bevorzugten Ausführungsform der Erfindung.

Das erste Tragelement 2a und das zweite Tragelement 2b sind in der vorliegenden Ausführungsform vorzugsweise durch eine Durchgangsschraube aus Stahl ausgebildet. Alternativ können das erste Tragelement 2a und das zweite Tragelement 2b beispielsweise aus einem anderen geeigneten Material und/oder einer anderen geeigneten Konstruktion ausgebildet sein.

Die erste Gehäusehälfte 5 und die zweite Gehäusehälfte 8 sind vorzugsweise jeweils als Stahlblechgehäuse ausgebildet. Alternativ ist auch eine Ausbildung aus einem anderen geeigneten Material denkbar.

Das an dem ersten Tragelement 2a angeordnete erste Befestigungsmittel 10a ist vorzugsweise durch eine Schraubmutter ausgebildet. Das erste Befestigungsmittel 10a ist vorzugsweise an einer Innenseite des zweiten axialen Endabschnitts 8b der zweiten Gehäusehälfte 8 angeordnet und befestigt das erste Tragelement 2a an der zweiten Gehäusehälfte 8. Zwischen dem ersten Befestigungsmittel 10a und der zweiten Gehäusehälfte 8 ist vorzugsweise eine Schaumdichtung 13a verpresst. Ein weiteres Befestigungsmittel 11a ist vorzugsweise auf einer dem Gehäuse abgewandten Seite des Hauptbremszylinders 7 an dem ersten Tragelement 2a angeordnet und klemmt den Flansch 7a des Hauptbremszylinders 7 gegen den Anschlag der zweiten Gehäusehälfte 8.

Das an dem zweiten Tragelement 2b angeordnete erste Befestigungsmittel 10b ist vorzugsweise durch eine Schraubmutter ausgebildet. Das zweite Befestigungsmittel 10b ist vorzugsweise an einer Innenseite des zweiten axialen Endabschnitts 8b der zweiten Gehäusehälfte 8 angeordnet und befestigt das zweite Tragelement 2b an der zweiten Gehäusehälfte 8. Zwischen dem zweiten Befestigungsmittel 10b und der zweiten Gehäusehälfte 8 ist vorzugsweise eine Schaumdichtung 13b verpresst. Ein weiteres Befestigungsmittel 11b ist vorzugsweise auf einer dem Gehäuse abgewandten Seite des Hauptbremszylinders 7 an dem zweiten Tragelement 2b angeordnet und klemmt den Flansch 7a des Hauptbremszylinders 7 gegen den Anschlag der zweiten Gehäusehälfte 8.

Das erste Tragelement 2a und das zweite Tragelement 2b sind vorzugsweise in die erste Gehäusehälfte 5 eingepresst bzw. fixiert. Die Einpresslänge entspricht vorzugsweise einer Blechdicke der ersten Gehäusehälfte 5. Um eine Führung des ersten Tragelementes 2a und des zweiten Tragelementes 2b in der ersten Gehäusehälfte 5 und der zweiten Gehäusehälfte 8 zu gewährleisten, sind das erste Tragelement 2a und das zweite Tragelement 2b wie vorstehend beschrieben auch an einer Innenseite der zweiten Gehäusehälfte 8 befestigt bzw. geklemmt. Die aus Gewichts- und Stabilitätsgründen aus dünnwandigem Stahlblech oder alternativ einem anderen Metallblech bestehende zweite Gehäusehälfte 8 ist vorzugsweise Bestandteil der Tragstruktur des elektromechanischen Bremskraftverstärkers. Die zweite Gehäusehälfte 8 ist getriebegehäuseseitig, d.h. mit der ersten Gehäusehälfte 5, vorzugsweise durch Nieten oder alternativ Schrauben verbunden. Hauptbremszylinderseitig ist die zweite Gehäusehälfte 8 vorzugsweise zwischen den Befestigungsmitteln 10a, 10b und dem Flansch 7a des Hauptbremszylinders 7 und den Befestigungsmitteln 11a, 11b geklemmt.

Dadurch sind das erste Tragelement 2a und das zweite Tragelement 2b vorzugsweise stabilisiert und können alle Kräfte und Drehmomente aufnehmen. Die Funktion des (in Fig. 2 nicht gezeigten) Lagerschildes wird vorzugsweise von der zweiten Gehäusehälfte 8 übernommen und dadurch ersetzt. Das erste Tragelement 2a und das zweite Tragelement 2b, die erste Gehäusehälfte 5 sowie die zweite Gehäusehälfte 8 sind vorzugsweise aus dem gleichen Werkstoff, in der vorliegenden Ausführungsform Stahl, ausgebildet. Dadurch ergibt sich in vorteilhafter Weise eine gleiche Wärmeausdehnung und eine geringere dynamische Belastung an Dichtstellen. Zudem besteht die Möglichkeit, kostengünstigere Dichtungen einzusetzen.

Eine elektromechanische Servo- bzw. Bremsunterstützungskraft stützt sich als Axialkraft an der Spindel 42, Spindelmutter 43, Zahnrad 44 und Kugellager 45 mit einem Flansch oder Clip-Ring an der ersten Gehäusehälfte 5 ab. Von einem Kugellagerflansch wird die Axialkraft über einen kegelförmigen Ansatz 46, ähnlich einer Tellerfeder, in den Boden der ersten Gehäusehälfte 5 zu dem ersten Tragelement 2a und dem zweiten Tragelement 2b weitergeleitet. Im Gegensatz zu einem steiferen Druckguss-Gehäuse der ersten Gehäusehälfte 5 kann der Getriebegehäuseboden 61 beispielsweise bei ABS-Pulsationen nachgeben und die hohen Kraftimpulse teilweise wegdämpfen.

Der kegelförmige Ansatz 46 wandelt die axiale Druckkraft in eine radiale Druckkraft im Getriebegehäuseboden 61 der ersten Gehäusehälfte 5. Dort überlagert sich der Druckkraft eine Biegespannung und kompensiert diese teilweise. Der kegelförmige Ansatz 46 reduziert somit signifikant die Zug- und Biegekräfte im Getriebegehäuseboden 61. Der Getriebegehäuseboden 61 gibt somit bei Kraftimpulsen nach und reduziert diese.

Das Kugellager 45 stützt sich axial an einem gestanzten Lochrand und radial an einem gestanzten Loch 47 ab. Aufgrund von Durchmessertoleranzen kann vorzugsweise ein Schiebesitz zwischen dem Loch 47 und dem Kugellager 45 vorgesehen sein. Auf einem Kugellager-Außenring ist eine Blechhülse 48 mit Ringnut aufgepresst. Ohne Servounterstützung hat der Fahrer somit mechanischen Durchgriff auf den Hauptbremszylinder 7. In diesem Modus kann das Kugellager 45 aus dem Loch 47 gezogen werden. Der Presssitz der Blechhülse 48 verhindert dies vorzugsweise. Darüber hinaus wird ein Faltenbalk 49 von der Blechhülse 48 gehalten.

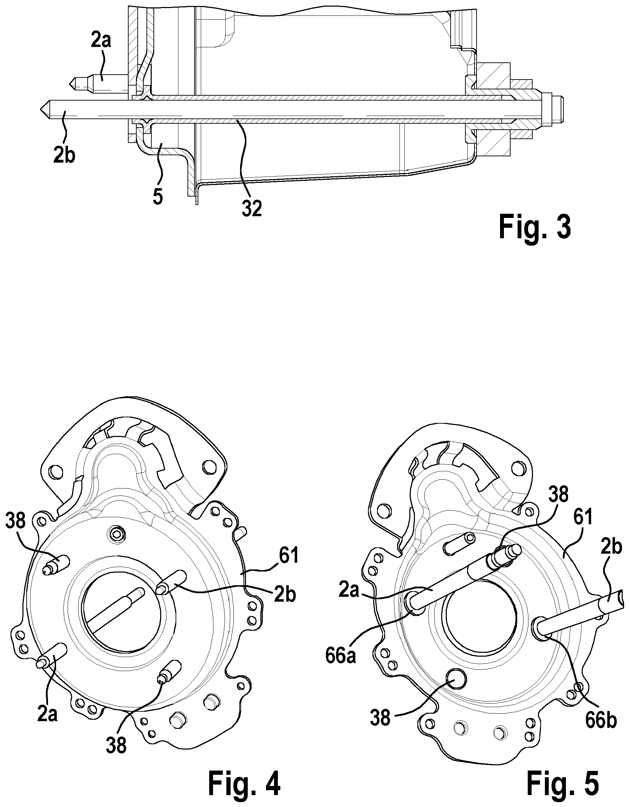

Fig. 3 zeigt eine vergrößerte Detailansicht eines Tragelementes des in Fig. 2 dargestellten elektromechanischen Bremskraftverstärkers für das Kraftfahrzeug gemäß der weiteren bevorzugten Ausführungsform der Erfindung.

Vergleichbar zur in Fig. 1 gezeigten Ausführung des ersten Tragelementes 2a und des zweiten Tragelementes 2b mittels eines jeweiligen Zugankers geht in der vorliegenden Ausführungsform ein Kraftfluss vom Hauptbremszylinder 7 über ein Rohr 32 zur ersten Gehäusehälfte 5. Über das erste Tragelement 2a und das zweite Tragelement 2b ist der elektromechanische Bremskraftverstärker 1 an der (in Fig. 3 nicht gezeigten) Spritzwand des Kraftfahrzeuges befestigbar, vorzugsweise klemmbar.

Fig. 4 zeigt eine Schnittdarstellung einer Rückseite eines Getriebegehäusebodens des elektromechanischen Bremskraftverstärkers für das Kraftfahrzeug gemäß der bevorzugten Ausführungsform der Erfindung.

In der vorliegenden Ausführungsform weist das Getriebegehäuse vier Anschraubpunkte an der (in Fig. 4 nicht gezeigten) Spritzwand des Kraftfahrzeuges auf. Das erste Tragelement 2a und das zweite Tragelement 2b sind vorzugsweise in dem Getriebegehäuseboden 61 eingepresst. Darüber hinaus sind zwei weitere Befestigungsmittel 38 auf der Rückseite des Getriebegehäusebodens 61 vorgesehen. Die Befestigungsmittel 38 sind vorzugsweise als Schrauben ausgebildet. Die Schrauben sind vorzugsweise in im Getriebegehäuseboden 61 ausgebildete Löcher eingepresst. Durch Vorsehen der vier Anschraubpunkte sind somit vorzugsweise vier Einbaulagen des elektromechanischen Bremskraftverstärkers möglich.

Fig. 5 zeigt eine perspektivische Darstellung einer Vorderseite des Getriebegehäusebodens des elektromechanischen Bremskraftverstärkers für das Kraftfahrzeug gemäß der bevorzugten Ausführungsform der Erfindung.

Das erste Tragelement 2a und das zweite Tragelement 2b sind vorzugsweise in dem Getriebegehäuseboden 61 eingepresst. Eine erste Ausbeulung 66a und eine zweite Ausbeulung 66b stehen steht von dem Getriebegehäuseboden 61 hervor, da auf der Rückseite des Getriebegehäusebodens 61 der Bund 63a, 63b eingepresst ist. Eine Rückseite der Befestigungsmittel 38 schließt vorzugsweise bündig mit der Vorderseite des Getriebegehäusebodens 61 ab.

Eine weitere Flexibilität bezüglich eines Einbauraums kann vorzugsweise dadurch gewonnen werden, indem der elektromechanische Bremskraftverstärker in einer nicht gespiegelten oder alternativ in einer gespiegelten Version vorliegt. Eine in Fig. 5 nicht gezeigte Spiegelebene liegt beispielsweise orthogonal und mittig zwischen dem ersten Tragelement 2a und dem zweiten Tragelement 2b. Der (in Fig. 5 nicht gezeigte) Elektromotor 21 ist vorzugsweise in einem vorgegebenen Winkel zur Spiegelebene angeordnet. Bei einer Spiegelung tauscht somit lediglich der Elektromotor 21 die Seite mit vertretbarem Aufwand. Lediglich die Bauteile der ersten Gehäusehälfte und der zweiten Gehäusehälfte werden somit zusätzlich als gespiegelte Version vorgesehen. Der vorbestimmte Winkel beträgt vorzugsweise 30° ± 10°.

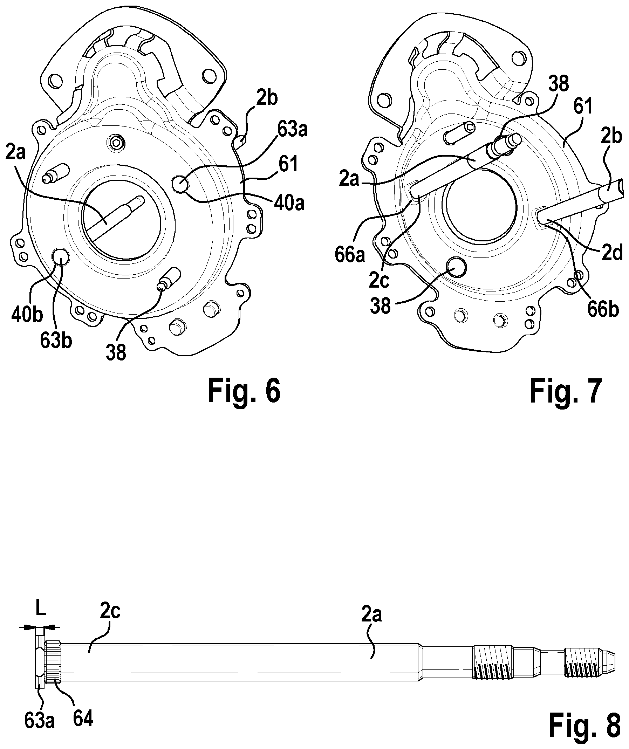

Fig. 6 zeigt eine perspektivische Darstellung der Rückseite des Getriebegehäusebodens des elektromechanischen Bremskraftverstärkers für das Kraftfahrzeug gemäß einer weiteren bevorzugten Ausführungsform der Erfindung.

In der vorliegenden Ausführungsform schließen das erste Tragelement 2a und das zweite Tragelement 2b bündig mit der Rückseite des Getriebegehäusebodens 61 ab. Die als Schrauben ausgeführten Befestigungsmittel 38 sind an der Rückseite des Getriebegehäusebodens 61 befestigt und dienen der Befestigung des elektromechanischen Bremskraftverstärkers an der (in Fig. 6 nicht gezeigten) Spritzwand des Kraftfahrzeuges. Das erste Tragelement 2a und das zweite Tragelement 2b sind vorzugsweise in eine jeweilige Öffnung 40a, 40b des Getriebegehäusebodens 61 eingepresst.

Fig. 7 zeigt eine perspektivische Darstellung der Vorderseite des Getriebegehäusebodens des elektromechanischen Bremskraftverstärkers für das Kraftfahrzeug gemäß der weiteren bevorzugten Ausführungsform der Erfindung.

Das erste Tragelement 2a und das zweite Tragelement 2b sind wie vorstehend erwähnt in jeweilige Öffnungen 40a, 40b des Getriebegehäusebodens 61 eingepresst. Eine erste Ausbeulung 66a und eine zweite Ausbeulung 66b stehen steht von dem Getriebegehäuseboden 61 hervor, da auf der Rückseite des Getriebegehäusebodens 61 der Bund 63a, 63b eingepresst ist. Eine jeweilige Rückseite der Befestigungsmittel 38 ist mit der Vorderseite des Getriebegehäusebodens 61 bündig ausgebildet.

Fig. 8 zeigt eine perspektivische Darstellung des Tragelementes des elektromechanischen Bremskraftverstärkers für das Kraftfahrzeug gemäß einer bevorzugten Ausführungsform der Erfindung.

An dem ersten axialen Endabschnitt 2c des ersten Tragelementes 2a ist benachbart zu dem Bund 63a ein Rändel 64 ausgebildet. Der Rändel 64 weist vorzugsweise eine größere Länge L als eine Dicke D des (in Fig. 8 nicht gezeigten) Getriebegehäusebodens 61 auf. Der Rändel 64 ist vorzugsweise in die in dem Getriebegehäuseboden ausgebildete Öffnung einpressbar. Hierbei ist der an einer der Einpressseite gegenüberliegenden Seite des Getriebegehäusebodens hervorstehend angeordnete Rändel verstemm- oder verpressbar.

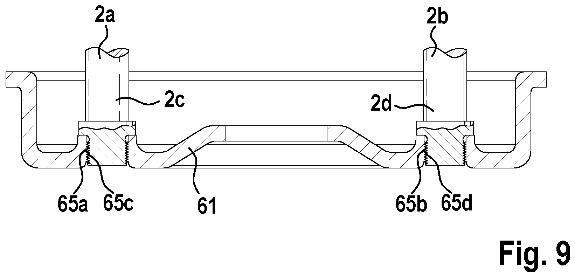

Fig. 9 zeigt eine perspektivische Darstellung des Getriebegehäusebodens mit montierten Tragelementen des elektromechanischen Bremskraftverstärkers für das Kraftfahrzeug gemäß einer weiteren bevorzugten Ausführungsform der Erfindung.

Der Getriebegehäuseboden 61 weist vorzugsweise einen ersten Durchzug 65a und einen zweiten Durchzug 65b auf. Der erste Durchzug 65a weist vorzugsweise ein Innengewinde 65c und der zweite Durchzug 65b weist vorzugsweise ein Innengewinde 65d auf. Der erste Durchzug 65a nimmt vorzugsweise einen axialen Endabschnitt 2c des ersten Tragelementes 2a auf. Der zweite Durchzug 65d nimmt vorzugsweise den axialen Endabschnitt 2d des zweiten Tragelementes 2b auf. Somit ist vorzugsweise eine robustere Anbindung an den Getriebegehäuseboden 61 sowie eine gleiche Montagerichtung wie die als Schrauben ausgebildeten Befestigungsmittel 38 erreichbar.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise ist eine Baulänge des elektromechanischen Bremskraftverstärkers beispielsweise durch Variation eines Durchmessers des ersten Tragelementes und des zweiten Tragelementes und einer damit verbundenen Reduzierung der Länge des ersten Tragelementes und des zweiten Tragelementes anpassbar.

### Bezugszeichenliste

- 1,100: Bremskraftverstärker
- 2a: erstes Tragelement
- 2b: zweites Tragelement
- 2c, 2d: erster axialer Endabschnitt
- 2e, 2f: zweiter axialer Endabschnitt
- 4a, 4b: Gewinde
- 5: erste Gehäusehälfte
- 6a, 6b: Bund
- 7: Hauptbremszylinder
- 8: zweite Gehäusehälfte
- 8a: erster axialer Endabschnitt
- 8b: zweiter axialer Endabschnitt
- 9: Rückstellfeder
- 10a: erstes Befestigungsmittel
- 10b: zweites Befestigungsmittel
- 11a: weiteres Befestigungsmittel
- 11b: weiteres Befestigungsmittel
- 13a, 13b: Schaumdichtung
- 15: Eingangsstange
- 17: Ausgangsstange
- 20, 43: Spindelmutter
- 21: Elektromotor
- 37: Schrauben
- 38: Befestigungsmittel
- 40a, 40b: Öffnung
- 42: Spindel
- 44: Zahnrad
- 45: Kugellager
- 46: Ansatz
- 47: Loch
- 48: Blechhülse
- 49: Faltenbalk
- 50: Kunststoff-Zahnrad
- 51: Spalt
- 60: Getriebe
- 61: Getriebegehäuseboden
- 62: Spritzwand
- 62a: erster Befestigungspunkt
- 62b: zweiter Befestigungspunkt
- 62c, 62d: weiterer Befestigungspunkt
- 63a, 63b: Bund
- 64: Rändel
- 65a: erster Durchzug
- 65b: zweiter Durchzug
- 65c, 65d: Innengewinde
- 66a: erste Ausbeulung
- 66b: zweite Ausbeulung
- 70: Gehäuse
- D: Dicke
- L: Länge
- V: Verstellachse

## Patentansprüche

1. Elektromechanischer Bremskraftverstärker (1, 100) für ein Kraftfahrzeug, mit:
einem Elektromotor, welcher über ein Getriebe (60) mit einer Spindel (42) derart wirkverbunden ist, dass eine Rotation eines Läufers des Elektromotors eine Translationsbewegung der Spindel (42) bewirkt,
wobei an einem Getriebegehäuseboden (61) des Getriebes (60) zumindest ein Tragelement (2a, 2b) befestigt ist, welches sich im Wesentlichen parallel zu einer Verstellachse (V) der Spindel (42) erstreckt,
wobei an dem zumindest einen Tragelement (2a, 2b) ein Hauptbremszylinder (7) befestigbar ist,
und wobei das zumindest eine Tragelement (2a, 2b) dazu ausgebildet ist, in Axial--und/oder Radialrichtung auf das zumindest eine Tragelement (2a, 2b) wirkende Kräfte abzustützen,
**dadurch gekennzeichnet, dass**
das zumindest eine Tragelement (2a, 2b) in eine in dem Getriebegehäuseboden (61) ausgebildete Öffnung (40a, 40b) eingepresst ist, wobei ein an einem ersten axialen Endabschnitt (2c, 2d) des zumindest einen Tragelements (2a, 2b) ausgebildeter Bund (63a, 63b) an dem Getriebegehäuseboden (61) anliegt.

2. Elektromechanischer Bremskraftverstärker nach Anspruch 1, **dadurch gekennzeichnet, dass** ein Gehäuse (70) des elektromechanischen Bremskraftverstärkers (1, 100) eine erste Gehäusehälfte (5) aufweist, in welcher das Getriebe (60) angeordnet ist, und eine zweite Gehäusehälfte (8) aufweist, welche an einem ersten axialen Endabschnitt (8a) an der ersten Gehäusehälfte (5) befestigt und an einem zweiten axialen Endabschnitt (8b) an dem Hauptbremszylinder (7) befestigbar ist.

3. Elektromechanischer Bremskraftverstärker nach Anspruch 2, **dadurch gekennzeichnet, dass** das zumindest eine Tragelement (2a, 2b) im Wesentlichen zylindrisch ausgebildet ist, wobei die erste Gehäusehälfte (5) an der zweiten Gehäusehälfte (8) durch zumindest ein an dem zumindest einen Tragelement (2a, 2b) angeordnetes Befestigungsmittel (10, 11) befestigt ist, und wobei durch das zumindest eine Befestigungsmittel (10, 11) der Hauptbremszylinder (7) an dem zumindest einen Tragelement (2a, 2b) befestigbar ist.

4. Elektromechanischer Bremskraftverstärker nach einem der vorhergehenden Ansprüche, **dadurch gekennzeichnet, dass** die erste Gehäusehälfte (5) an einem Befestigungspunkt (62a, 62b) an einer Spritzwand (62) des Kraftfahrzeuges befestigbar ist, wobei sich das zumindest eine Tragelement (2a, 2b) durch eine in dem Getriebegehäuseboden (61) ausgebildete Öffnung (40a, 40b) erstreckt, und wobei das zumindest eine Tragelement (2a, 2b) an dem Befestigungspunkt (62a, 62b) der Spritzwand (62) des Kraftfahrzeuges befestigbar ist.

5. Elektromechanischer Bremskraftverstärker nach Anspruch 4, **dadurch gekennzeichnet, dass** die erste Gehäusehälfte (5) an einem weiteren Befestigungspunkt (62c, 62d) der Spritzwand (62) des Kraftfahrzeuges befestigbar ist, wobei ein im Wesentlichen zylindrisch ausgebildetes Befestigungsmittel (38) mit dem Getriebegehäuseboden (61) verbunden ist, welches an dem weiteren Befestigungspunkt (62c, 62d) der Spritzwand (62) des Kraftfahrzeuges befestigbar ist.

6. Elektromechanischer Bremskraftverstärker nach einem der vorhergehenden Ansprüche, **dadurch gekennzeichnet, dass** an dem ersten axialen Endabschnitt (2c, 2d) des zumindest einen Tragelements (2a, 2b) benachbart zu dem Bund (63a, 63b) ein Rändel (64) ausgebildet ist, welcher eine größere Länge (L) als eine Dicke (D) des Getriebegehäusebodens (61) aufweist, wobei der Rändel (64) in die in dem Getriebegehäuseboden (61) ausgebildete Öffnung (40a, 40b) eingepresst ist, wobei der an einer der Einpressseite gegenüberliegenden Seite des Getriebegehäusebodens (61) hervorstehend angeordnete Rändel (64) verstemmt oder verpresst ist.

7. Elektromechanischer Bremskraftverstärker nach einem der Ansprüche 1 bis 3, **dadurch gekennzeichnet, dass** der Getriebegehäuseboden (61) einen Durchzug (65a, 65b) mit einem Innengewinde (65c, 65d) aufweist, wobei der Durchzug (65a, 65b) einen axialen Endabschnitt (2c, 2d) des zumindest einen Tragelementes (2a, 2b) aufnimmt.

8. Elektromechanischer Bremskraftverstärker nach einem der vorhergehenden Ansprüche, **dadurch gekennzeichnet, dass** das zumindest eine Tragelement (2a, 2b) einen Zuganker oder eine Durchgangsschraube aufweist, wobei der Zuganker oder die Durchgangsschraube aus Stahl ausgebildet ist.

9. Elektromechanischer Bremskraftverstärker nach einem der vorhergehenden Ansprüche, **dadurch gekennzeichnet, dass** die erste Gehäusehälfte (5) als Aluminium-Druckguss-Gehäuse und die zweite Gehäusehälfte (8) als Kunststoff-Gehäuse ausgebildet ist oder die erste Gehäusehälfte (5) und die zweite Gehäusehälfte (8) als Stahlblechgehäuse ausgebildet sind.

10. Bremssystem, mit:
einem elektromechanischen Bremskraftverstärker (1, 100) nach einem der Ansprüche 1 bis 9; und
einem Hauptbremszylinder (7), welcher durch den elektromechanischen Bremskraftverstärker (1, 100) betätigbar ist.

## Claims

1. Electromechanical brake booster (1, 100) for a motor vehicle, comprising:
an electric motor which is operatively connected via a gear mechanism (60) to a spindle (42) in such a way that a rotation of a rotor of the electric motor causes a translational movement of the spindle (42), wherein at least one support element (2a, 2b) is fastened to a gear mechanism housing bottom (61) of the gear mechanism (60) and extends substantially parallel to an adjustment axis (V) of the spindle (42),
wherein a master brake cylinder (7) can be fastened to the at least one support element (2a, 2b),
and wherein the at least one support element (2a, 2b) is designed to support forces acting on the at least one support element (2a, 2b) in the axial and/or radial direction,
**characterized in that**
the at least one support element (2a, 2b) is pressed into an opening (40a, 40b) formed in the gear mechanism housing bottom (61), wherein a collar (63a, 63b) formed on a first axial end portion (2c, 2d) of the at least one support element (2a, 2b) bears against the gear mechanism housing bottom (61) .

2. Electromechanical brake booster according to Claim 1, **characterized in that** a housing (70) of the electromechanical brake booster (1, 100) has a first housing half (5) in which the gear mechanism (60) is arranged, and has a second housing half (8) which is fastened at a first axial end portion (8a) to the first housing half (5) and can be fastened at a second axial end portion (8b) to the master brake cylinder (7).

3. Electromechanical brake booster according to Claim 2, **characterized in that** the at least one support element (2a, 2b) is substantially cylindrical, wherein the first housing half (5) is fastened to the second housing half (8) by at least one fastening means (10, 11) arranged on the at least one support element (2a, 2b), and wherein the master brake cylinder (7) can be fastened to the at least one support element (2a, 2b) by the at least one fastening means (10, 11).

4. Electromechanical brake booster according to one of the preceding claims, **characterized in that** the first housing half (5) can be fastened to a bulkhead (62) of the motor vehicle at a fastening point (62a, 62b), wherein the at least one support element (2a, 2b) extends through an opening (40a, 40b) formed in the gear mechanism housing bottom (61), and wherein the at least one support element (2a, 2b) can be fastened to the fastening point (62a, 62b) of the bulkhead (62) of the motor vehicle.

5. Electromechanical brake booster according to Claim 4, **characterized in that** the first housing half (5) can be fastened to a further fastening point (62c, 62d) of the bulkhead (62) of the motor vehicle, wherein a substantially cylindrical fastening means (38) is connected to the gear mechanism housing bottom (61) and can be fastened to the further fastening point (62c, 62d) of the bulkhead (62) of the motor vehicle.

6. Electromechanical brake booster according to one of the preceding claims, **characterized in that** a knurl (64) is formed on the first axial end portion (2c, 2d) of the at least one support element (2a, 2b) adjacent to the collar (63a, 63b) and has a greater length (L) than a thickness (D) of the gear mechanism housing bottom (61), wherein the knurl (64) is pressed into the opening (40a, 40b) formed in the gear mechanism housing bottom (61), wherein the knurl (64) arranged so as to project on an opposite side of the gear mechanism housing bottom (61) to the press-in side is caulked or pressed.

7. Electromechanical brake booster according to one of Claims 1 to 3, **characterized in that** the gear mechanism housing bottom (61) has a passage (65a, 65b) with an internal thread (65c, 65d), wherein the passage (65a, 65b) receives an axial end portion (2c, 2d) of the at least one support element (2a, 2b) .

8. Electromechanical brake booster according to one of the preceding claims, **characterized in that** the at least one support element (2a, 2b) has a tie rod or a through-bolt, wherein the tie rod or the through-bolt is formed from steel.

9. Electromechanical brake booster according to one of the preceding claims, **characterized in that** the first housing half (5) is designed as an aluminium die-cast housing and the second housing half (8) is designed as a plastic housing, or the first housing half (5) and the second housing half (8) are designed as sheet steel housings.

10. Brake system, comprising:
an electromechanical brake booster (1, 100) according to one of Claims 1 to 9; and
a master brake cylinder (7) which can be actuated by the electromechanical brake booster (1, 100).

## Revendications

1. Servofrein électromécanique (1, 100) pour un véhicule automobile, comprenant:
un moteur électrique, qui est en liaison active avec une broche (42) par l'intermédiaire d'une transmission (60), de telle manière qu'une rotation d'un induit du moteur électrique provoque un mouvement de translation de la broche (42),
dans lequel au moins un élément de support (2a, 2b) est fixé à un fond de carter de transmission (61) de la transmission (60), et s'étend essentiellement parallèlement à un axe de déplacement (V) de la broche (42),
dans lequel un maître-cylindre (7) peut être fixé audit au moins un élément de support (2a, 2b), et
dans lequel ledit au moins un élément de support (2a, 2b) est configuré pour supporter des forces agissant en direction axiale et/ou radiale sur ledit au moins un élément de support (2a, 2b),
**caractérisé en ce que** ledit au moins un élément de support (2a, 2b) est serti dans une ouverture (40a, 40b) pratiquée dans le fond de carter de transmission (61), dans lequel un bourrelet (63a, 63b) formé sur une première partie d'extrémité axiale (2c, 2d) dudit au moins un élément de support (2a, 2b) s'applique sur le fond de carter de transmission (61).

2. Servofrein électromécanique selon la revendication 1, **caractérisé en ce qu'**un carter (70) du servofrein électromécanique (1, 100) présente une première moitié de carter (5), dans laquelle la transmission (60) est disposée, et une seconde moitié de carter (8) qui est fixée par une première partie d'extrémité axiale (8a) à la première moitié de carter (5) et qui peut être fixée par une deuxième partie d'extrémité axiale (8b) au maître-cylindre (7).

3. Servofrein électromécanique selon la revendication 2, **caractérisé en ce que** ledit au moins un élément de support (2a, 2b) est de forme essentiellement cylindrique, dans lequel la première moitié de carter (5) est fixée à la seconde moitié de carter (8) par au moins un moyen de fixation (10, 11) disposé sur ledit au moins un élément de support (2a, 2b), et dans lequel le maître-cylindre (7) peut être fixé audit au moins un élément de support (2a, 2b) par ledit au moins un moyen de fixation (10, 11).

4. Servofrein électromécanique selon l'une quelconque des revendications précédentes, **caractérisé en ce que** la première moitié de carter (5) peut être fixée par un point de fixation (62a, 62b) à un tablier (62) du véhicule automobile, dans lequel ledit au moins un élément de support (2a, 2b) s'étend à travers une ouverture (40a, 40b) formée dans le fond de carter de transmission (61), et dans lequel ledit au moins un élément de support (2a, 2b) peut être fixé au point de fixation (62a, 62b) du tablier (62) du véhicule automobile.

5. Servofrein électromécanique selon la revendication 4, **caractérisé en ce que** la première moitié de carter (5) peut être fixée à un autre point de fixation (62c, 62d) du tablier (62) du véhicule automobile, dans lequel un moyen de fixation (38) de forme essentiellement cylindrique est relié au fond de carter de transmission (61), et peut être fixé à l'autre point de fixation (62c, 62d) du tablier (62) du véhicule automobile.

6. Servofrein électromécanique selon l'une quelconque des revendications précédentes, **caractérisé en ce qu'**une molette (64) est formée sur la première partie d'extrémité axiale (2c, 2d) dudit au moins un élément de support (2a, 2b) à proximité du bourrelet (63a, 63b), laquelle présente une plus grande longueur (L) qu'une épaisseur (D) du fond de carter de transmission (61), dans lequel la molette (64) est sertie dans l'ouverture (40a, 40b) formée dans le fond de carter de transmission (61), dans lequel la molette (64) disposée en saillie sur un côté du fond de carter de transmission (61) opposé au côté de sertissage est matée ou pressée.

7. Servofrein électromécanique selon l'une quelconque des revendications 1 à 3, **caractérisé en ce que** le fond de carter de transmission (61) présente un passage (65a, 65b) avec un filet intérieur (65c, 65d), dans lequel le passage (65a, 65b) contient une partie d'extrémité axiale (2c, 2d) dudit au moins un élément de support (2a, 2b).

8. Servofrein électromécanique selon l'une quelconque des revendications précédentes, **caractérisé en ce que** ledit au moins un élément de support (2a, 2b) présente une tige de traction ou une vis de passage, dans lequel la tige de traction ou la vis de passage est formée en acier.

9. Servofrein électromécanique selon l'une quelconque des revendications précédentes, **caractérisé en ce que** la première moitié de carter (5) est formée par un carter moulé sous pression en aluminium et la seconde moitié de carter (8) est formée par un carter en matière plastique ou la première moitié de carter (5) et la seconde moitié de carter (8) sont formées par des carters en tôle d'acier.

10. Système de freinage, comprenant:
un servofrein électromécanique (1, 100) selon l'une quelconque des revendications 1 à 9; et
un maître-cylindre (7), qui peut être actionné par le servofrein électromécanique (1, 100).
